# EUROPÄISCHE PATENTSCHRIFT

(11) **EP 3 411 270 B1**
(45) Veröffentlichungstag und Bekanntmachung des Hinweises auf die Patenterteilung: **04.09.2019**
(21) Anmeldenummer: 16804777.7
(22) Anmeldetag: 30.11.2016
(51) Int. Cl.: B60R 13/02, B62J 17/00, F16B 5/02, F16B 5/06

(54) **VERKLEIDUNGSANORDNUNG FÜR EIN KRAFTFAHRZEUG**
PANELING ASSEMBLY FOR A MOTOR VEHICLE
SYSTÈME DE CARÉNAGE POUR VÉHICULE À MOTEUR

(30) Priorität: 02.02.2016 DE 102016201521
(43) Veröffentlichungstag der Anmeldung: 12.12.2018
(73) Patentinhaber: Bayerische Motoren Werke Aktiengesellschaft, 80809 München (DE)
(72) Erfinder: WEBER, Marc, 80939 München (DE)
(86) Internationale Anmeldenummer: PCT/EP2016/079234
(87) Internationale Veröffentlichungsnummer: WO 2017/133807

(56) Entgegenhaltungen:
- DE-A1- 19 948 165

## Beschreibung

Die Erfindung betrifft eine Verkleidungsanordnung für ein Kraftfahrzeug gemäß dem Oberbegriff des Patentanspruchs 1.

Im Fahrzeugbau stellt die Befestigung von Verkleidungsteilen an dem Fahrzeug eine besondere Herausforderung dar. So ist zwischen zwei benachbarten Verkleidungsteilen üblicherweise eine Fuge vorgesehen, deren Breite als Spaltmaß bezeichnet wird und einen wichtigen Faktor für konstruktive Aspekte aber auch die Aerodynamik des Fahrzeugs darstellt. Gleichmäßige und möglichst geringe Spaltmaße sind aufgrund von auftretenden Bauteiltoleranzen besonders in einer Serienfertigung schwierig zu erzielen. So gelten geringe und einheitliche Spaltmaße als besonderes Kennzeichen von qualitativ hochwertigen Fahrzeugen und erfordern eine aufwendige Abstimmung der benachbarten Bauteile und eine prozesssichere, reproduzierbare Fertigung.

Die Erfüllung hoher Toleranzanforderungen ist insbesondere bei benachbarten Verkleidungsteilen eine große Herausforderung, welche direkt miteinander verbunden werden und hierbei korrekt auszurichten sind. Doch selbst bei einer zunächst korrekt ausgerichteten Anordnung kann es zu einer unbeabsichtigten Verschiebung der Verkleidungsteile im Rahmen einer gegenseitigen Verschraubung kommen. Eine Ursache liegt in den auftretenden Momenten, die punktuell beim Verschrauben, insbesondere beim finalen Festziehen der Schrauben, auf die Verkleidungsteile wirken.

In Folge dieser Verschiebungen der Verkleidungsteile zueinander, können diese miteinander in Reibkontakt treten, wodurch Spannungen in den Verkleidungsteilen sowie eine störende Geräuschentwicklung zu beobachten sind. Generell können bereits kleinste Unterschiede in Parallelität und Spaltmaß zu unerwünschten aerodynamischen und aeroakustischen Erscheinungen führen und darüber hinaus leicht mit bloßem Auge wahrgenommen werden.

Eine weitere Verkleidungsanordnung ist in der DE 199 48 165 A1 offenbart.

Aufgabe der Erfindung ist es daher, eine Verkleidungsanordnung bereitzustellen, welche die genannten Nachteile reduziert oder überwindet und eine möglichst einfache und reproduzierbare Montage erlaubt.

Diese Aufgabe wird gelöst mit einer Verkleidungsanordnung mit den Merkmalen des Patentanspruchs 1. Vorteilhafte Ausführungsformen ergeben sich aus den hiervon abhängigen Patentansprüchen.

Demnach wird eine Verkleidungsanordnung für ein Kraftfahrzeug bereitgestellt, mit einem ersten Verkleidungselement und einem mit dem ersten Verkleidungselement verbundenen zweiten Verkleidungselement, wobei das erste Verkleidungselement einen Befestigungsfortsatz umfasst, der mittels eines Verbindungsmittels mit einem an dem zweiten Verkleidungselement ausgebildeten Aufnahmeabschnitt verbunden ist. Außerdem umfasst der Befestigungsfortsatz außerdem eine Rastnase zum verrastenden Eingriff in eine in dem Aufnahmeabschnitt ausgebildete Rastöffnung des zweiten Verkleidungselements.

Die beschriebene Verkleidungsanordnung sieht also zwei Verkleidungselemente vor, die einerseits mit Hilfe des Verbindungsmittels aneinander befestigt sind. Hierzu ist an dem ersten Verkleidungselement der Befestigungsfortsatz vorgesehen, der an dem Aufnahmeabschnitt des zweiten Verkleidungselementes befestigt wird. Zusätzlich zu dieser Verbindung ist eine Rastverbindung vorgesehen, die durch die Rastnase des Befestigungsfortsatzes und die Rastöffnung des zweiten Verkleidungselements gebildet wird, um eine (zusätzliche) formschlüssige Verbindung bereitzustellen. Die Rastnase kann beispielsweise als Lasche mit einer als Haken wirkenden Wulst an einer Spitze der Lasche ausgestaltet sein.

Eine derartige Anordnung bietet die besondere Möglichkeit, dass die beiden Verkleidungselemente zunächst formschlüssig mithilfe der in die Rastöffnung eingreifenden Rastnase miteinander verclipst und in verbundenem Zustand in Position gehalten werden können. Eine anschließende zusätzliche Fixierung wird durch den Einsatz des Verbindungsmittels erzielt, welches die zunächst vorgenommene Rastverbindung unterstützend ergänzt. Es wird also aufgrund der zunächst bereitgestellten Rastverbindung und der dadurch erzielten "Vorpositionierung" der Verkleidungselemente die Montage erheblich erleichtert, da diese von einem Monteur nicht beide gleichzeitig in der vorgesehenen Position gehalten werden müssen, um das Verbindungsmittel anzubringen. Stattdessen werden die beiden Verkleidungselemente durch die Rastverbindung aneinander fixiert und korrekt zueinander positioniert.

Aufgrund der gemeinsamen Anordnung der Rastnase und des Verbindungsmittels an dem Befestigungsfortsatz ergibt sich zusätzlich die Wirkung, dass ein unerwünschtes Verschieben der Verkleidungselemente zueinander aufgrund einer Krafteinwirkung, insbesondere aufgrund einer Drehmomenteneinwirkung, beim Einbringen des Verbindungsmittels deutlich reduziert wird, wodurch eine genauere und reproduzierbare Anordnung ermöglicht wird.

Eine Reduzierung der störenden Krafteinwirkungen kann zudem erzielt werden, indem das Verbindungsmittel möglichst benachbart zu der Rastnase angeordnet ist.

Die Verkleidungsanordnung wird lediglich anhand einer Rastverbindung und einem Verbindungsmittel beschrieben. Es versteht sich jedoch, dass die Verkleidungsanordnung ebenso eine Mehrzahl dieser Rastverbindungen und eine Mehrzahl dieser Verbindungsmittel aufweisen kann, die jeweils in gleicher Weise ausgeführt sind.

Vorzugsweise sind das erste und/oder das zweite Verkleidungselement als Kunststoffteil, insbesondere als Spritzgussteile oder Tiefziehteile, ausgeführt. Entsprechend können der Befestigungsfortsatz und/oder der Aufnahmeabschnitt an das jeweils restliche Verkleidungselement angespritzt oder bereits gemeinsam mit diesem hergestellt sein. Ebenfalls vorzugsweise sind der Befestigungsfortsatz und/oder der Aufnahmeabschnitt einstückig mit dem jeweils zugehörigen ersten beziehungsweise zweiten Verkleidungselement ausgebildet.

Gemäß einer bevorzugten Ausführungsform ist der Befestigungsfortsatz auf einer von einer äußeren Sichtseite abgewandten Rückseite des ersten Verkleidungselements angeordnet. Die Sichtseite stellt eine nach außen sichtbare Oberfläche des Verkleidungselements dar. Auf der hiervon abgewandten Rückseite ist dagegen der Befestigungsfortsatz angeordnet, wodurch dieser durch das Verkleidungselement beziehungsweise dessen Sichtseite nach außen hin verdeckt ist. Beispielsweise ist diese Rückseite dem Fahrzeuginneren zugewandt und bleibt somit einem Betrachter des Fahrzeugs in der Regel verborgen.

Gemäß einer weiteren Ausführungsform umfassen der Befestigungsfortsatz und der Aufnahmeabschnitt jeweils eine Durchgangsöffnung zur Aufnahme des Verbindungsmittels. In beiden Komponenten ist demnach jeweils eine Durchgangsöffnung vorgesehen, die in einem verbauten Zustand miteinander fluchtend angeordnet sind, so dass das Verbindungsmittel in beide Durchgansöffnungen eingesetzt werden kann, um die beiden Komponenten miteinander zu verbinden. Vorzugsweise liegen der Befestigungsfortsatz und der Aufnahmeabschnitt hierbei flächig aufeinander und werden mittels des Verbindungsmittels aufeinandergepresst. Beispielsweise kann das Verbindungsmittel eine Schraube oder einen Niet umfassen. Im Falle einer Schraube kann diese mit einer Mutter, insbesondere einer Steckmutter, verschraubt sein. Alternativ können die Durchgangsöffnung des ersten und/oder des zweiten Verkleidungselements ein Gewinde aufweisen.

Ebenfalls ist die Durchgangsöffnung des Befestigungsfortsatzes unmittelbar benachbart zu der Rastnase, insbesondere in deren Wurzelbereich oder in der Rastnase selbst vorgesehen. In diesen Fällen werden die beiden von der Rastverbindung und dem Verbindungsmittel gebildeten Befestigungspunkte räumlich zusammengeführt und auftretende Momente auf die Verkleidungsanordnung nochmals erheblich reduziert.

Des Weiteren kann der Aufnahmeabschnitt eine Einbuchtung in dem zweiten Verkleidungselement umfassen, wobei in einer seitlichen Wandung der Einbuchtung die Rastöffnung und in einem Bodenabschnitt der Einbuchtung die Durchgangsöffnung des Aufnahmeabschnitts ausgebildet sein. Zusätzlich ist es möglich, dass ein von der Einbuchtung gebildeter Raum zur Aufnahme des Befestigungsfortsatzes ausgelegt ist.

Vorzugsweise ist die Rastöffnung derart ausgestaltet, dass diese die Rastnase zumindest in einer Einschubrichtung fixiert. Die Rastnase wird also in Einschubrichtung in die Rastöffnung eingeschoben und dort verrastet, beispielsweise durch Hintergreifen eines Randabschnittes der Rastöffnung. Eine Rückbewegung entgegen der Einschubrichtung wird durch die Rastnase wirkungsvoll verhindert.

Zusätzlich kann die Rastöffnung in einer senkrecht zu der Einschubrichtung ausgerichteten seitlichen Richtung eine größere Breite aufweisen als eine Breite der Rastnase. Auf diese Weise wird ein gewisser Spielraum für die Rastnase geschaffen, so dass die Rastnase entweder bereits in der seitlichen Richtung leicht versetzt in die Rastöffnung eingeschoben und/oder nach dem Einschieben in der seitlichen Richtung verschoben werden kann. In beiden Fällen wird somit ein Toleranzausgleich ermöglicht. Anschließend werden die beiden Verkleidungselemente durch das Verbindungsmittel fixiert.

Um eine Ausrichtung der beiden Verkleidungselemente in Einschubrichtung festzulegen, können das erste und/oder das zweite Verkleidungselement mindestens einen Anschlag umfassen, der eine in Einschubrichtung vollständig eingeschobene Position der Rastnase definiert. Ein weitergehendes Einschieben in der Einschubrichtung wird auf diese Weise unterbunden. In entgegengesetzter Richtung verhindert die Rastnase eine entsprechende Rückbewegung.

Des Weiteren kann ein Anschlag des mindestens einen Anschlags an der Rastnase und/oder beabstandet zu der Rastnase angeordnet sein. Im Falle eines von der Rastnase beabstandeten Anschlags, kann dieser beispielsweise im Bereich einer dem anderen Verkleidungselement zugewandten Bauteilkante des ersten oder zweiten Verkleidungselements angeordnet sein.

Außerdem kann das Kraftfahrzeug ein Motorrad oder ein motorradähnliches Fahrzeug, insbesondere ein Scooter, ein zweirädriger, dreirädriger oder vierrädriger Motorroller, ein Quad oder ein Trike, sein.

Die Erfindung wird nachfolgend anhand eines Ausführungsbeispiels unter Bezugnahme auf die Zeichnungen näher beschrieben. Es zeigen:
- Fig. 1: eine seitliche Schnittansicht einer Verkleidungsanordnung gemäß der Beschreibung,
- Fig. 2: ein erstes Verkleidungselement für eine Verkleidungsanordnung gemäß Fig. 1 in perspektivischer Ansicht,
- Fig. 3: ein zweites Verkleidungselement für die Verkleidungsanordnung gemäß Fig. 1 in perspektivischer Ansicht,
- Fig. 4: das erste und zweite Verkleidungselement für die Verkleidungsanordnung gemäß Fig. 1 in zusammengesetztem Zustand in perspektivischer Ansicht.

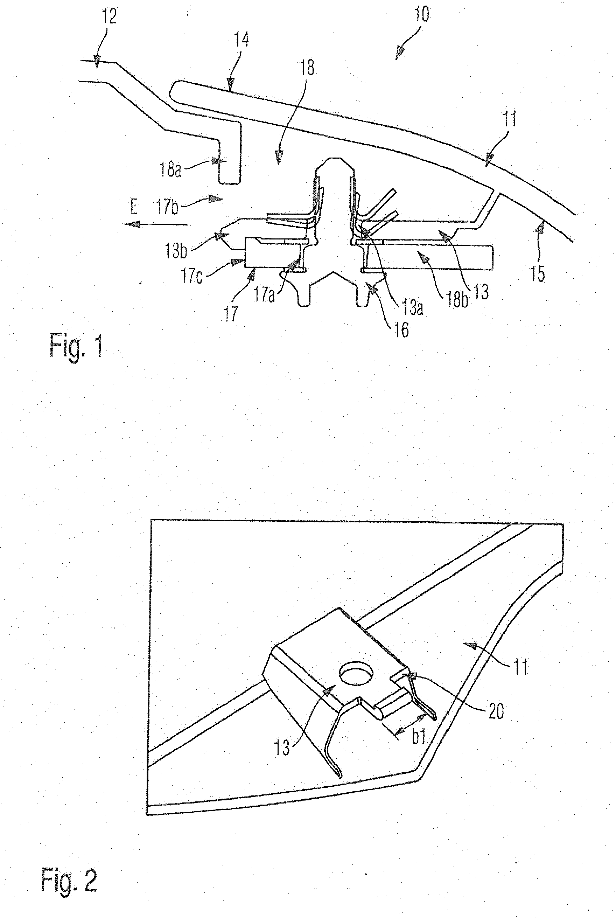

Fig. 1 zeigt eine Verkleidungsanordnung 10 für ein Kraftfahrzeug, welche ein erstes Verkleidungselement 11 und ein mit dem ersten Verkleidungselement 11 verbundenes zweites Verkleidungselement 12 umfasst. Das erste Verkleidungselement 11 wiederum umfasst einen Befestigungsfortsatz 13, der auf einer von einer äußeren Sichtseite 14 abgewandten Rückseite 15 des ersten Verkleidungselements 11 angeordnet ist und mittels eines als Schraube ausgeführten Verbindungsmittels 16 mit einem an dem zweiten Verkleidungselement 12 ausgebildeten Aufnahmeabschnitt 17 verbunden ist. Hierzu weisen der Befestigungsfortsatz 13 und der Aufnahmeabschnitt 17 jeweils eine Durchgangsöffnung 13a,17a auf, die fluchtend zueinander ausgerichtet zur Aufnahme des Verbindungsmittels 16 vorgesehen sind. Das Verbindungsmittel umfasst beispielsweise eine Schraube 16, die in eine Mutter, insbesondere eine Steckmutter, eingreift. Selbstverständlich sind aber auch andere Verbindungsmittel einsetzbar, zum Beispiel ein Niet.

Der Befestigungsfortsatz 13 umfasst eine Rastnase 13b, die als Lasche ausgeführt ist und verrastend in eine in dem Aufnahmeabschnitt 17 ausgebildete Rastöffnung 17b des zweiten Verkleidungselements 12 eingreift, wodurch eine Rastverbindung beider Verkleidungselemente 11,12 miteinander hergestellt wird. Die Durchgangsöffnung des ersten Verkleidungselements 11 ist benachbart zu der Rastnase 13b beziehungsweise zu dessen Wurzelbereich angeordnet.

Fig. 2 zeigt das erste Verkleidungselement 11 für die in Fig. 1 dargestellte Verkleidungsanordnung 10 separat und in perspektivischer Ansicht.

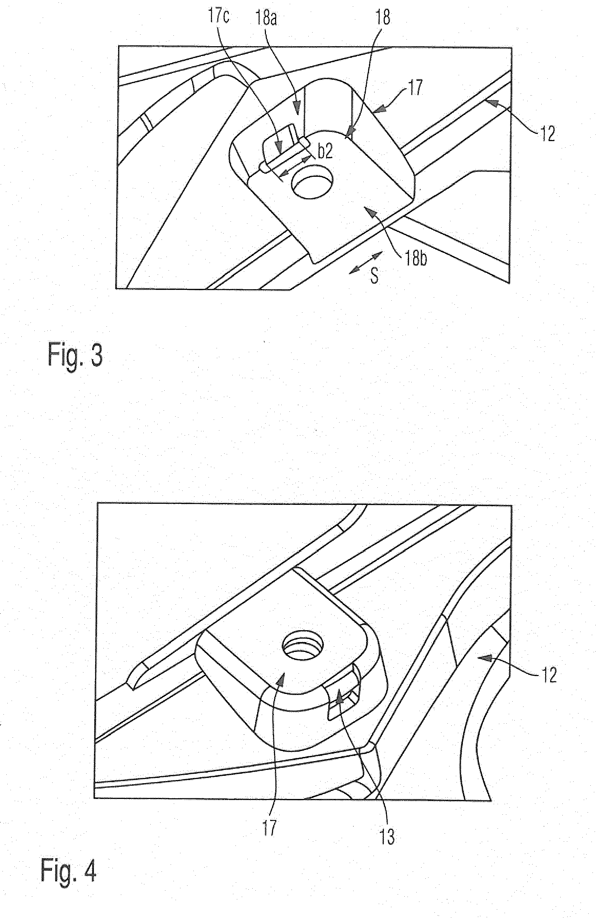

Das zweite Verkleidungselement 12 ist in Fig. 3 ebenfalls separat und in perspektivischer Ansicht abgebildet. Demnach weist der Aufnahmeabschnitt 17 eine Einbuchtung 18 in dem zweiten Verkleidungselement 12 auf. In einer seitlichen Wandung 18a der Einbuchtung 18 ist die Rastöffnung 17b und in einem Bodenabschnitt 18b der Einbuchtung 18 die Durchgangsöffnung 17a des Aufnahmeabschnitts 17 ausgebildet.

Diese Ausführung ermöglicht, dass die Rastöffnung 17b die Rastnase 13b zumindest in einer Einschubrichtung E fixiert, indem die Rastnase 13b einen die Rastöffnung 17b begrenzenden Randabschnitt 17c hintergreift und somit verhindert, dass sich die Rastnase 13b entgegen der Einschubrichtung E aus diesem Eingriff löst.

Zusätzlich kann die Rastöffnung 17b in einer senkrecht zu der Einschubrichtung E ausgerichteten seitlichen Richtung S breiter ausgebildet sein als die Rastnase. Dies bedeutet, dass die entsprechende Breite b1 der Rastnase 13b kleiner als eine Breite b2 der Rastöffnung 13b ist. In Fig. 1 ist diese seitliche Richtung S beispielsweise senkrecht zur Bildebene ausgerichtet, so dass in gewissem Umfang eine Relativbewegung der beiden Verkleidungselemente 11,12 zum Ausgleich von Toleranzen möglich ist, zumindest solange das Verbindungsmittel 16 dies zulässt und die beiden Verkleidungselemente 11,12 noch nicht vollständig fixiert sind.

Lediglich optional können das erste 11 und/oder das zweite Verkleidungselement 12 mindestens einen Anschlag umfassen, der eine in Einschubrichtung E vollständig eingeschobene Position der Rastnase 13b definiert. Im dargestellten Ausführungsbeispiel ist ein Anschlag 20 des mindestens einen Anschlags unmittelbar an der Rastnase 13b beziehungsweise in dessen Wurzelbereich angeordnet.

Fig. 4 zeigt das erste 11 und zweite Verkleidungselement 12 für die zu Fig. 1 beschriebene Verkleidungsanordnung 10 in zusammengesetztem Zustand in perspektivischer Ansicht, bevor das Verbindungsmittel 16 eingesetzt wird.

Grundsätzlich kann die Verkleidungsanordnung 10 für ein Kraftfahrzeug vorgesehen sein, insbesondere für ein Motorrad oder ein motorradähnliches Fahrzeug, insbesondere einen Scooter, einen zweirädrigen, dreirädrigen oder vierrädrigen Motorroller, ein Quad oder ein Trike.

## Patentansprüche

1. Verkleidungsanordnung für ein Kraftfahrzeug, mit einem ersten Verkleidungselement (11) und einem mit dem ersten Verkleidungselement (11) verbundenen zweiten Verkleidungselement (12), wobei das erste Verkleidungselement (11) einen Befestigungsfortsatz (13) umfasst, der mittels eines Verbindungsmittels (16) mit einem an dem zweiten Verkleidungselement (12) ausgebildeten Aufnahmeabschnitt (17) verbunden ist, **dadurch gekennzeichnet, dass** der Befestigungsfortsatz (13) außerdem eine Rastnase (13b) zum verrastenden Eingriff in eine in dem Aufnahmeabschnitt (17) ausgebildete Rastöffnung (17b) des zweiten Verkleidungselements (12) umfasst.

2. Verkleidungsanordnung nach Anspruch 1, **dadurch gekennzeichnet, dass** der Befestigungsfortsatz (13) auf einer von einer äußeren Sichtseite (14) abgewandten Rückseite (15) des ersten Verkleidungselements (11) angeordnet ist.

3. Verkleidungsanordnung nach mindestens einem der Ansprüche 1 bis 2, **dadurch gekennzeichnet, dass** der Befestigungsfortsatz (13) und der Aufnahmeabschnitt (17) jeweils eine Durchgangsöffnung (13a,17a) zur Aufnahme des Verbindungsmittels (16) umfassen.

4. Verkleidungsanordnung nach Anspruch 3, **dadurch gekennzeichnet, dass** der Aufnahmeabschnitt (17) eine Einbuchtung (18) in dem zweiten Verkleidungselement (12) umfasst, wobei in einer seitlichen Wandung (18a) der Einbuchtung (18) die Rastöffnung (17b) und in einem Bodenabschnitt (18b) der Einbuchtung (18) die Durchgangsöffnung (17a) des Aufnahmeabschnitts (17) ausgebildet sind.

5. Verkleidungsanordnung nach mindestens einem der Ansprüche 1 bis 4, **dadurch gekennzeichnet, dass** das Verbindungsmittel (16) eine Schraube oder einen Niet umfasst.

6. Verkleidungsanordnung nach mindestens einem der Ansprüche 1 bis 5, **dadurch gekennzeichnet, dass** die Rastöffnung (17b) die Rastnase (13b) zumindest in einer Einschubrichtung (E) fixiert.

7. Verkleidungsanordnung nach Anspruch 6, **dadurch gekennzeichnet, dass** die Rastöffnung (17b) in einer senkrecht zu der Einschubrichtung (E) ausgerichteten seitlichen Richtung (S) eine größere Breite (b2) aufweist, als eine Breite (b1) der Rastnase (13b).

8. Verkleidungsanordnung nach mindestens einem der Ansprüche 1 bis 7, **dadurch gekennzeichnet, dass** erste (11) und/oder zweite Verkleidungselement (12) mindestens einen Anschlag umfasst, der eine in Einschubrichtung (E) vollständig eingeschobene Position der Rastnase (13b) definiert.

9. Verkleidungsanordnung nach Anspruch 8, **dadurch gekennzeichnet, dass** ein Anschlag des mindestens einen Anschlags an der Rastnase (13b) und/oder beabstandet zu der Rastnase (13b) angeordnet ist.

10. Verkleidungsanordnung nach mindestens einem der Ansprüche 1 bis 9, **dadurch gekennzeichnet, dass** das Kraftfahrzeug ein Motorrad oder ein motorradähnliches Fahrzeug, insbesondere ein Scooter, ein zweirädriger, dreirädriger oder vierrädriger Motorroller, ein Quad oder ein Trike, ist.

## Claims

1. A trim arrangement for a motor vehicle, having a first trim element (11) and a second trim element (12) connected to the first trim element (11), wherein the first trim element (11) comprises a fastening extension (13) which is connected by means of a connection means (16) to a receiving portion (17) formed on the second trim element (12), **characterised in that** the fastening extension (13) furthermore comprises a latching nose (13b) for latching engagement in a latching opening (17b) of the second trim element (12) which is formed in the receiving portion (17).

2. A trim arrangement according to Claim 1, **characterised in that** the fastening extension (13) is arranged on a rear side (15) of the first trim element (11) which faces away from an outer visible side (14).

3. A trim arrangement according to at least one of Claims 1 to 2, **characterised in that** the fastening extension (13) and the receiving portion (17) comprise in each case a through-opening (13a, 17a) for accommodating the connection means (16).

4. A trim arrangement according to Claim 3, **characterised in that** the receiving portion (17) comprises an indentation (18) in the second trim element (12), with the latching opening (17b) being formed in a lateral wall (18a) of the indentation (18) and the through-opening (17a) of the accommodating portion (17) being formed in a bottom portion (18b) of the indentation (18).

5. A trim arrangement according to at least one of Claims 1 to 4, **characterised in that** the connection means (16) comprises a screw or a rivet.

6. A trim arrangement according to at least one of Claims 1 to 5, **characterised in that** the latching opening (17b) fixes the latching nose (13b) at least in a direction of insertion (E).

7. A trim arrangement according to Claim 6, **characterised in that** the latching opening (17b) in a lateral direction (S) oriented perpendicular to the direction of insertion (E) has a greater width (b2) than a width (b1) of the latching nose (13b).

8. A trim arrangement according to at least one of Claims 1 to 7, **characterised in that** the first (11) and/or second trim element (12) comprises at least one stop which defines a position of the latching nose (13b) which is completely pushed in in the direction of insertion (E).

9. A trim arrangement according to Claim 8, **characterised in that** a stop of the at least one stop is arranged on the latching nose (13b) and/or spaced apart from the latching nose (13b).

10. A trim arrangement according to at least one of Claims 1 to 9, **characterised in that** the motor vehicle is a motorcycle or a vehicle similar to a motorcycle, especially a scooter, a two-wheeled, three-wheeled or four-wheeled motor scooter, a quad bike or a trike.

## Revendications

1. Dispositif de garniture destiné à un véhicule comprenant un premier élément de garniture (11) et un second élément de garniture (12) relié au premier élément de garniture (11), le premier élément de garniture (11) comprenant un prolongement de fixation (13) qui est relié par un moyen de liaison (16) à un segment de réception (17) formé sur le second élément de garniture (12),
**caractérisé en ce que**
le prolongement de fixation (13) comporte, outre un bec d'encliquetage (13b) permettant son encliquetage dans une ouverture d'encliquetage (17b) du second élément de garniture (12) formée dans le segment de réception (17).

2. Dispositif de garniture conforme à la revendication 1,
**caractérisé en ce que**
le prolongement de fixation (13) est installé sur la face arrière (15) du premier élément de garniture (11) située à l'opposé de la face externe visible (14).

3. Dispositif de garniture conforme à au moins l'une des revendications 1 à2,
**caractérisé en ce que**
le prolongement de fixation (13) et le segment de réception (17) comprennent chacun une ouverture de passage (13a, 17a) destinée à recevoir un moyen de liaison (16).

4. Dispositif de garniture conforme à la revendication 3,
**caractérisé en ce que**
le segment de réception (17) comporte un renfoncement (18) dans le second élément de garniture (12), dans la paroi latérale (18a) du renfoncement (18) étant formée l'ouverture d'encliquetage (17b) et dans le segment de fond (18b) du renfoncement (18) étant formée l'ouverture de passage (17a) du segment de réception (17).

5. Dispositif de garniture conforme à au moins l'une des revendications 1 à 4,
**caractérisé en ce que**
le moyen de liaison (16) est une vis ou un rivet.

6. Dispositif de garniture conforme à au moins l'une des revendications 1 à 5,
**caractérisé en ce que**
l'ouverture d'encliquetage (17b) fixe le bec d'encliquetage (13b) au moins dans la direction d'insertion (E).

7. Dispositif de garniture conforme à la revendication 6,
**caractérisé en ce que**
l'ouverture d'encliquetage (17b) a dans la direction latérale (S) orientée perpendiculairement à la direction d'insertion (E) une largeur (b2) supérieure à la largeur (b1) du bec d'encliquetage (13b).

8. Dispositif de garniture conforme à au moins l'une des revendications 1 à 7,
**caractérisé en ce que**
le premier élément de garniture (11) et/ou le second élément de garniture (12) comporte(nt) au moins une butée qui définit la position du bec d'encliquetage (13b) totalement insérée dans la direction d'insertion (E).

9. Dispositif de garniture conforme à la revendication 8,
**caractérisé en ce qu'**
une butée est située sur le bec d'encliquetage (13b) et/ou à distance du bec d'encliquetage (13b).

10. Dispositif de garniture conforme à au moins l'une des revendications 1 à 9,
**caractérisé en ce que**
le véhicule est une moto ou un véhicule similaire à une moto, en particulier un scooter, un motocycle à deux, trois ou quatre roues, un quad ou un tricycle.
